# EUROPÄISCHE PATENTSCHRIFT

(11) **EP 2 700 148 B1**
(45) Veröffentlichungstag und Bekanntmachung des Hinweises auf die Patenterteilung: **13.06.2018**
(21) Anmeldenummer: 12714961.5
(22) Anmeldetag: 02.04.2012
(51) Int. Cl.: H02K 3/52, H02K 3/32, H02K 1/14

(54) **STATORSEGMENT FÜR EINEN SEGMENTIERT AUSGEFÜHRTEN STATOR EINES ELEKTROMOTORS, STATOR AUS GLEICHARTIGEN STATORSEGMENTEN UND VERFAHREN ZUM HERSTELLEN EINES STATORS AUS STATORSEGMENTEN**
STATOR SEGMENT FOR A STATOR HAVING A SEGMENTED DESIGN OF AN ELECTRIC MOTOR, STATOR COMPOSED OF SIMILAR STATOR SEGMENTS AND METHOD FOR PRODUCING A STATOR FROM STATOR SEGMENTS
SEGMENT DE STATOR POUR UN STATOR DE MOTEUR ÉLECTRIQUE CONÇU DE MANIÈRE SEGMENTÉE, STATOR CONSTITUÉ DE SEGMENTS DE STATOR ANALOGUES ET PROCÉDÉ POUR PRODUIRE UN STATOR À PARTIR DE SEGMENTS DE STATOR

(30) Priorität: 18.04.2011 DE 102011017457
(43) Veröffentlichungstag der Anmeldung: 26.02.2014
(73) Patentinhaber: Sew-Eurodrive GmbH & Co. KG, 76646 Bruchsal (DE)
(72) Erfinder: HETTEL, Domenik, 76474 Au am Rhein (DE)
(86) Internationale Anmeldenummer: PCT/EP2012/001449
(87) Internationale Veröffentlichungsnummer: WO 2012/143089

(56) Entgegenhaltungen:
- WO-A1-2010/086997
- DE-A1-102008 023 923
- DE-A1-102008 033 604
- JP-A- H11 341 714
- JP-A- 2004 248 471
- US-A1- 2002 084 716
- US-A1- 2008 265 694

## Beschreibung

Die Erfindung betrifft ein Statorsegment für einen segmentiert ausgeführten Stator eines Elektromotors, Stator aus gleichartigen Statorsegmenten und Verfahren zum Herstellen eines Stators aus Statorsegmenten.

Es ist bekannt, bei einem Stator eines Elektromotors eine Wicklung um Zähne eines Blechpakets auszuführen. Zur Herstellung des Blechpakets wird dieses beispielsweise schweißverbunden. Zur elektrischen Isolierung wird zwischen Wicklungsbereich und Blechpaket ein Isolierpapier eingelegt.

Aus der DE 10 2008 023 923 A1 ist als nächstliegender Stand der Technik ein Stator für einen Elektromotor bekannt.

Aus der DE 10 2008 033604 A1 ist ein Elektromotor mit einem segmentierten Stator bekannt, auf dem eine Endkappe aufgesetzt ist.

Aus der DE 10 2008 023923 A1 ist ein ebensolcher Stator bekannt, bei dem jedes Einzelsegment mit einer Kunststoffschicht umspritzt ausgeführt ist.

Aus der US 2008/265694 A1 ist ein Herstellverfahren für einen Stator eines Elektromotors bekannt.

Aus der WO 2010/086997 A1 ist ebenfalls ein segmentierter Stator bekannt, bei dem das jeweilige Einzelsegment von einer Kunststoffschicht umgeben ist.

Aus der JP H11 341714 A ist bekannt, Kunststoffschichten zum Isolierung des Blechpaketes eines Elektromotors zu verwenden.
Aus der JP 2004 248471 A ist bekannt, Kunststoffschichten zum Isolierung des Blechpaketes eines Elektromotors zu verwenden.
Aus der US 2002/084716 A1 ist eine Endkappe für einen geschalteten Reluktanzmotor bekannt.
Der Erfindung liegt daher die Aufgabe zugrunde, einen Motor einfacher herstellbar zu machen.
Erfindungsgemäß wird die Aufgabe bei dem Statorsegment für einen segmentiert ausgeführten Stator eines Elektromotors nach den in Anspruch 1, bei dem Stator aus gleichartigen Statorsegmenten nach den in Anspruch 9 und bei dem Verfahren zum Herstellen eines Stators aus Statorsegmenten nach den in Anspruch 10 angegebenen Merkmalen gelöst.
Wichtige Merkmale der Erfindung bei dem Statorsegment für einen segmentiert ausgeführten Stator eines Elektromotors sind, dass das Statorsegment ein Blechpaket aufweist, in welchem ein oder mehrere, durch das Blechpaket durchgehende Kunststoffstege eingespritzt sind,
wobei das Blechpaket eine Kunststoffschicht aufweist, die zwischen dem Wicklungsbereich der Statorwicklung und dem Blechpaket angeordnet ist zur elektrischen Isolation des Wicklungsbereichs vom Blechpaket,
wobei der eine der oder die Kunststoffstege in eine erste Endkappe münden, in welche auch die Kunststoffschicht mündet.

Von Vorteil ist dabei, dass durch die Kunststoffschicht eine erhöhte Torsionssteifigkeit und Biegesteifigkeit und gleichzeitig elektrische Isolierung erzeugbar ist. Die magnetischen Eigenschaften des Blechpakets bleiben dabei im Wesentlichen unbeeinflusst. Außerdem wirkt die Kunststoffschicht mit den Kunststoffstegen zusammen, da somit über die Endkappe ein Querverstrebung und somit weiter erhöhte Stabilität erreichbar ist. Die Kunststoffstege, Kunststoffschicht und Endkappe ist in einem einzigen Arbeitsschritt, nämlich Kunststoffspritzgießen, erzeugbar. Somit ist eine einfache und kostengünstige Herstellung ermöglicht.

Bei einer vorteilhaften Ausgestaltung ist am Blechpaket ein Zahn ausgebildet, dessen Zahnkopf verbreitert ist. Von Vorteil ist dabei, dass ein möglichst großer Raumbereich als Wicklungsbereich entsteht. Denn bei in Umfangsrichtung hintereinander angeordneten gleichartigen Segmenten ist durch einen möglichst dünnwandigen Zahn ein möglichst großer Wicklungsbereich herstellbar.

Bei einer vorteilhaften Ausgestaltung ragt der Kunststoffsteg auf der der ersten Endkappe gegenüber liegenden Seite des Blechpakets aus diesem heraus und ist verbreitert, insbesondere pilzkopfförmig verbreitert
beziehungsweise
ragen die Kunststoffstege auf der der ersten Endkappe gegenüber liegenden Seite des Blechpakets aus diesem heraus und münden in einen verbreiterten, insbesondere pilzkopfförmigen, Bereich. Von Vorteil ist dabei, dass das Blechpaket axial zwischen der ersten Endkappe und dem verbreiterten Bereich begrenzt und somit auch gehalten ist. Da zusätzlich auch noch die Kunststoffschicht einen axialen Zusammenhalt bewirkt, ist ein Schweißverbinden oder andersartiges zusätzliches Verbinden des Blechpakets nicht notwendig. Denn die Kunststoffschicht verläuft nicht nur entlang des Randes eines Einzelblechs sondern auch in Stapelrichtung. Somit werden beim Umspritzen Vertiefungen durch die Kunststoffschicht aufgefüllt und daher die Einzelbleche des Blechpakets verbunden mittels der Kunststoffschicht.

Bei einer vorteilhaften Ausgestaltung ist auf der der ersten Endkappe gegenüber liegenden Seite des Blechpakets eine zweite Endkappe aufgeschoben oder einstückig angespritzt, insbesondere an den oder die Kunststoffstege und/oder die Kunststoffschicht. Von Vorteil ist dabei, dass ein Aufschieben einer zweiten Endkappe auf die verbreitert herausragenden Bereiche des Kunststoffstegs und/oder der Kunststoffschicht einfach ausführbar ist und eine formschlüssige Verbindung gewährleistet.

Bei einer vorteilhaften Ausgestaltung lenken die Endkappen den Wicklungsdraht um den jeweiligen Stirnbereich herum, insbesondere wobei die Endkappen Rillen aufweisen, die weniger als die Hälfte oder weniger als ein Drittel des Wicklungsdrahtdurchmessers voneinander beabstandet sind. Von Vorteil ist dabei, dass ein Verrutschen der Wicklungsdrähte verhindert ist und somit die Wicklung geführt wickelbar ist und somit eine hohe Fertigungsqualität erreichbar ist.

Bei einer vorteilhaften Ausgestaltung bedeckt die Kunststoffschicht den Zahn, insbesondere Zahnhals, oder den Zahn samt Zahnkopf und/oder umgibt zur elektrischen Isolierung der Statorwicklung und zur Verringerung der Oberflächenrauhigkeit. Von Vorteil ist dabei, dass Isolierpapier verzichtbar ist. Außerdem ist die Paketierung des Blechpakets in einem einzigen Arbeitsschritt, nämlich Spritzgießen, ermöglicht.

Bei einer vorteilhaften Ausgestaltung ist an einem in Umfangsrichtung angeordneten Endbereich des Blechpakets eine als Nutbereich fungierende Vertiefung ausgeformt und am in Umfangsrichtung anderen Endbereich eine als Federbereich fungierende Erhöhung ausgeformt,
insbesondere zur zumindest in radialer Richtung formschlüssigen Verbindung mit benachbarten Statorsegmenten. Von Vorteil ist dabei, dass gleichartige Segmente miteinander schnell und einfach und zumindest in radialer Richtung formschlüssig miteinander verbindbar sind.

Bei einer vorteilhaften Ausgestaltung ragt die Kunststoffschicht auf der der ersten Endkappe gegenüber liegenden Seite des Blechpakets aus diesem heraus, insbesondere im Bereich des Zahnkopfabschnitts, insbesondere und ist verbreitert, insbesondere pilzkopfförmig verbreitert. Von Vorteil ist dabei, dass eine zweite Endkappe Halt findet an den herausragenden Abschnitten.

Bei einer vorteilhaften Ausgestaltung ist die zweite Endkappe auf die herausragenden Bereiche der Kunststoffschicht und/oder des beziehungsweise der Kunststoffstege aufgesteckt. Von Vorteil ist dabei, dass ein Fertigstellen des Statorsegments in einfacher Weise ermöglicht ist.

Wichtige Merkmale bei dem aus solchen Statorsegmenten hergestellten Stator sind, dass die Statorsegmente in Umfangsrichtung aneinander gereiht sind und mit einem jeweils zumindest in radialer Richtung wirksamen Formschluss zusammengesetzt sind.

Von Vorteil ist dabei, dass die Statorsegmente einzeln herstellbar sind und danach in einfacher Weise zusammenfügbar sind. Zum Halten in Umfangsrichtung ist ein am äußeren Umfang aufgesteckter Haltering oder das Einfügen des Stators in ein Statorgehäuse vorteilhaft.

Wichtige Merkmale bei dem Verfahren zum Herstellen eines Stators aus Statorsegmenten sind, dass
- in einem ersten Schritt ein Blechpaket in eine Spritzgussform eingelegt und
- in einem zweiten Schritt mit Kunststoff umspritzt wird, wobei ein durch das Blechpaket durchgehender Kunststoffsteg und eine zumindest zwischen Wicklungsbereich und Blechpaket angeordnete Kunststoffschicht angespritzt wird an der äußeren Oberfläche des Segments, insbesondere an dessen zahnartig ausgeführten Abschnitt,
- in einem dritten Schritt eine Wicklung um die Kunststoffschicht aufgewickelt wird,
- in einem vierten Schritt die nach dem ersten, zweiten und dritten Schritt hergestellten Segmente miteinander verbunden werden, so dass ein ringförmiger Stator entsteht, insbesondere wobei der Stator eine konzentrierte Wicklung aufweist, also Einzelzahlbewicklung.

Von Vorteil ist dabei, dass eine einfache Herstellung ermöglicht ist und das Zusammenhalten des Blechpakets im gleichen Schritt wie das Anbringen der Endkappen zum Umlenken der Wicklungsdrähte ausführbar ist.

Der Kunststoff weist dabei eine höhere Isolationsfestigkeit als Luft auf, so dass geringere Abstände zwischen Wicklung und Blechpaket erlaubt sind als bei Verwendung von beispielsweise Papier.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine Schrägansicht auf ein erfindungsgemäßes Statorsegment eines Stators eines Elektromotors gezeigt.

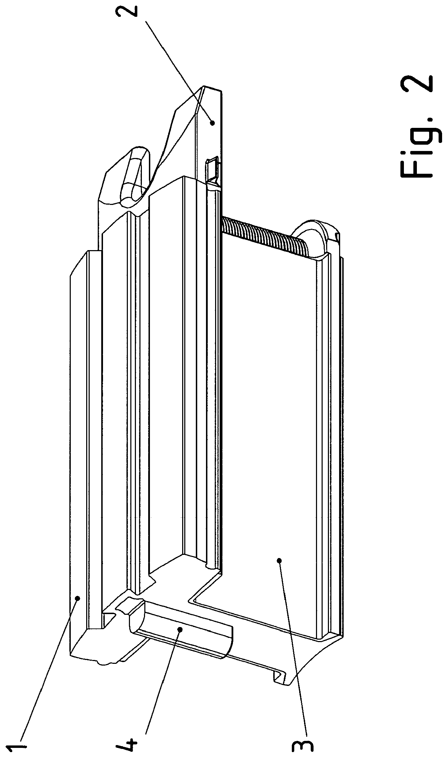

In der Figur 2 ist eine Schrägansicht auf das Statorsegment aus einem anderen Blickwinkel gezeigt.
In der Figur 3 ist eine Schrägansicht auf ein anderes erfindungsgemäßes Statorsegment eines Stators eines Elektromotors gezeigt.
In der Figur 4 ist eine Schrägansicht auf dieses Statorsegment aus einem anderen Blickwinkel gezeigt.
In der Figur 5 ist eine Draufsicht auf eine Stirnseite des Statorsegments gemäß Figur 3 und 4 gezeigt.

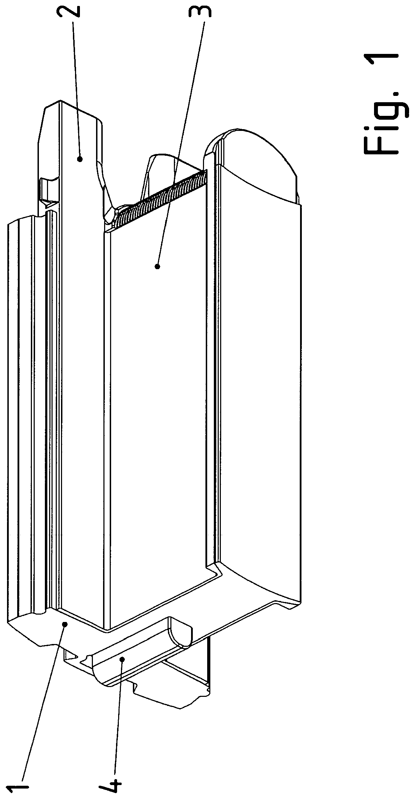

Wie in Figur 1 gezeigt, weist das Statorsegment ein Blechpaket auf, das aus in axialer Richtung, also in Richtung der Motorachse, gestapelt angeordneten Einzelblechen zusammengesetzt ist.

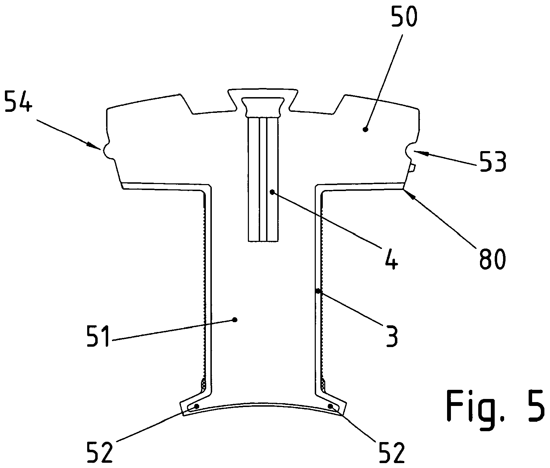

Analog zu Figur 5 weisen die Einzelbleche eine oder mehrere durchgehende Ausnehmungen auf. Diese Ausnehmungen berühren nicht den Randbereich des Einzelblechs und sind im Inneren des Segmentabschnitts 50 angeordnet und in axialer Richtung durchgehend.

Das Blechpaket weist daher ebenfalls eine in axialer Richtung durchgehende Ausnehmung auf, so dass nach Einspritzen von Kunststoff ein axial durchgehender Kunststoffsteg entsteht beziehungsweise zwei oder mehr axial durchgehende, zueinander parallele Kunststoffstege entstehen.

An seinem ersten axialen Endbereich ist der Kunststoffsteg außerhalb des Blechpakets verdickt ausgeführt, endet also in einem pilzkopfförmigen Abschnitt 4. Bei Ausführung von mehreren parallelen Kunststoffstegen münden diese in denselben pilzkopfförmigen Abschnitt 4. Somit ist eine axiale Begrenzung geschaffen für das Blechpaket. Außerdem ist ein Zusammenhalt für das Blechpaket erreicht. Gegebenenfalls ist sogar eine hohe Biegesteifigkeit und/oder Torsionssteifigkeit erreichbar.

Auf der gegenüber liegenden axialen Stirnseite mündet der Kunststoffsteg beziehungsweise münden die Kunststoffstege in eine Endkappe 2, die im selben Kunststoffspritzgieß-Arbeitsschritt erzeugt wird wie auch der pilzkopfförmige Abschnitt 4.

Der Zahnabschnitt 51 wird an seiner Außenseite ebenfalls mit einer Kunststoffschicht 3 umspritzt.

Nach Fertigstellen dieses Zahnsegments wird eine weitere Endkappe auf diejenige Stirnseite des Segments aufgeschoben, auf der der pilzkopfförmige Abschnitt 4 herausragt. Somit überdeckt diese weitere Endkappe den pilzkopfförmigen Abschnitt 4.

Wie in den Figuren ersichtlich, verläuft die Kunststoffschicht 3 von einem Oberflächenbereich am Segmentabschnitt 50 entlang an dem Zahnabschnitt 51 bis zum Zahnkopfabschnitt 52. Somit ist die Statorwicklung, welche in diesem Bereich aufgewickelt wird, elektrisch isoliert vom Blechpaket des Segments. Die Wandstärke der Kunststoffschicht 3 wird entsprechend gewählt, beispielsweise 0,3 bis 0,7 mm oder sogar bis zu 3 mm.

Darüber hinaus wirkt die Kunststoffschicht 3 zusätzlich als weiterer Steg und verstärkt somit den Zusammenhalt des Blechpakets 1 und erhöht die Biegesteifigkeit und die Torsionssteifigkeit.

Bei weiteren erfindungsgemäßen Ausführungsbeispielen wird das Blechpaket voll umspritzt, so dass beide Endkappen sowie die Kunststoffschicht 3 zusammen mit dem Kunststoffsteg beziehungsweise zusammen mit den Kunststoffstegen gespritzt werden.

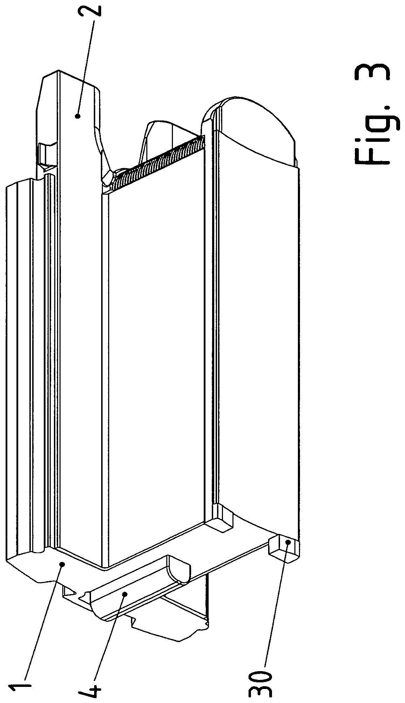

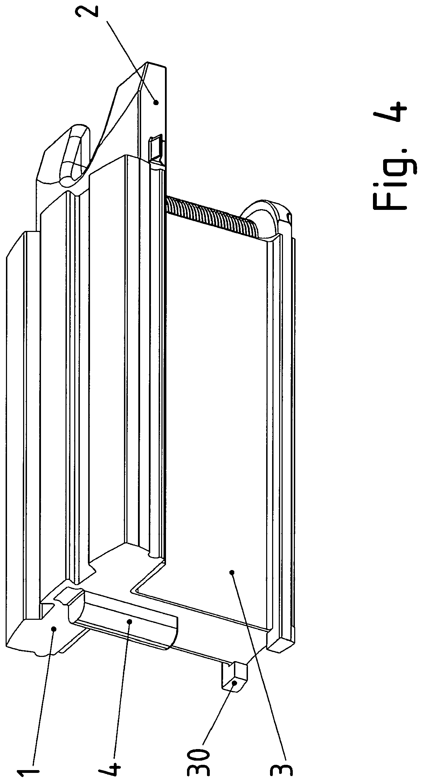

Wie in den Figuren 3 und 4 gezeigt, ist bei dem dortigen Statorsegment die Kunststoffschicht im Bereich des Zahnkopfabschnitts 52 an derselben axialen Stirnseite des Blechpakets verdickt herausgeführt, um wie auch der pilzkopfförmige Bereich 4 als Haltenoppe zu fungieren. Dieser verdickte Bereich ist daher auch als Haltenoppe 30 bezeichenbar.

Nach Umspritzung der Blechpakete mit einer oder beiden Endkappen werden die Segmente mit einer Wicklung umwickelt und dann zu einem Stator des Elektromotors zusammengesetzt. Hierzu weist der Segmentabschnitt einen Federabschnitt 54 an seinem ersten Endbereich in Umfangsrichtung auf und einen Nutabschnitt an seinem anderen Endbereich entgegen der Umfangsrichtung. Somit ist das Statorsegment mit gleichartigen benachbarten Statorsegmenten formschlüssig verbindbar, wobei der Formschluss in radialer Richtung wirkt.

Ein Isolationspapier zwischen Wicklung und Blechpaket ist verzichtbar, da die Kunststoffschicht 3 als elektrisches Isolationsmittel fungiert.

Durch die vollständige Umspritzung des Blechpakets ist auch ein erhöhter Schutz gegen Korrosion erreichbar. Beispielsweise ist die Kunststoffschicht 3 auch derart ausführbar, dass der gesamte Zahnkopfabschnitt 52 umspritzt ist und somit elektrisch isoliert sowie korrosionsgeschützt ist. Außerdem ist der Zusammenhalt des Blechpakets insgesamt verbessert und somit die Torsionssteifigkeit vergrößert.

Die Endkappen haben die Funktion, die Umlenkung der Wicklungsdrähte um die jeweiligen Stirnbereiche herum zu lenken und das Blechpaket elektrisch zu isolieren. Außerdem wird der Wicklungsdraht an pfostenartig herausragenden Erhebungen herausgeführt aus der Wicklung, um ein elektrisches Verbinden des Wicklungsdrahts zu ermöglichen und/oder den Wicklungsdraht umzulenken in Umfangsrichtung.

Die Kunststoffschicht 3 ist glatt ausgeführt. Jedoch weisen die Endkappen in dem umlenkenden Bereich Rillen auf, die parallel zueinander verlaufen und deren Tiefpunkte zueinander weniger als um einen halben Wicklungsdrahtdurchmesser beabstandet sind. Die Rillen führen somit den Wicklungsdraht im Umlenkbereich um die Stirnseite herum.

Die Kunststoffschicht ermöglicht auch eine ebenere, also geradere Ausführung des Statorsegments.

Die Zahnköpfe sind zum Rotor hin gerichtet. Bei Umspritzung der Zahnköpfe ist auch ein verbesserter Luftstrom im Raumberiech zwischen Stator und Rotor ermöglicht, da die Oberflächenrauhigkeit der Kunststoffschicht viel geringer ist also die des bloßen Zahnkopfes des Blechpakets.

### Bezugszeichenliste

1 Blechpaket, insbesondere aus gestapelt angeordneten Einzelblechen
2 Endkappe, insbesondere Kunststoffendkappe
3 Kunststoffschicht
4 Haltenoppen
30 Haltenoppen
50 Segmentabschnitt
51 Zahnabschnitt
52 Zahnkopfabschnitt
53 Nutabschnitt
54 Federabschnitt

## Patentansprüche

1. Statorsegment für einen segmentiert ausgeführten Stator eines Elektromotors,
wobei das Statorsegment ein Blechpaket (1) aufweist, in welchem ein oder mehrere, durch das Blechpaket (1) durchgehende Kunststoffstege eingespritzt sind,
**wobei** das Blechpaket (1) eine Kunststoffschicht (3) aufweist, die zwischen dem Wicklungsbereich der Statorwicklung und dem Blechpaket (1) angeordnet ist zur elektrischen Isolation des Wicklungsbereichs vom Blechpaket (1),
wobei der eine der oder die Kunststoffstege in eine erste Endkappe (2) münden, in welche auch die Kunststoffschicht (3) mündet,
**dadurch gekennzeichnet, dass**
**der Kunststoffsteg auf der der ersten Endkappe (2) gegenüber liegenden Seite des Blechpakets (1) aus diesem herausragt und verbreitert ist,**
**wobei die Kunststoffschicht (3) auf der der ersten Endkappe (2) gegenüber liegenden Seite des Blechpakets (1) aus diesem herausragt,**
**wobei die zweite Endkappe (2) auf die herausragenden Bereiche der Kunststoffschicht (3) und/oder des beziehungsweise der Kunststoffstege aufgesteckt ist.**

2. Statorsegment nach Anspruch 1,
**dadurch gekennzeichnet, dass**
**die erste Endkappe (2) zusammen mit den durchgehenden Kunststoffstegen und der Kunststoffschicht (3) durch Spritzgießen in einem einzigen Arbeitsschritt hergestellt sind.**

3. Statorsegment nach einem der vorangegangenen Ansprüche,
**dadurch gekennzeichnet, dass**
am Blechpaket (1) ein Zahn ausgebildet ist, dessen Zahnkopf verbreitert ist.

4. Statorsegment nach einem der vorangegangenen Ansprüche,
**dadurch gekennzeichnet, dass**
**der Kunststoffsteg auf der der ersten Endkappe (2) gegenüber liegenden Seite des Blechpakets (1) pilzkopfförmig verbreitert ist.**

5. Statorsegment nach einem der vorangegangenen Ansprüche,
**dadurch gekennzeichnet, dass**
die Endkappen (2) den Wicklungsdraht um den jeweiligen Stirnbereich herumlenken, wobei die Endkappen (2) Rillen aufweisen, die weniger als die Hälfte oder weniger als ein Drittel des Wicklungsdrahtdurchmessers voneinander beabstandet sind.

6. Statorsegment nach einem der vorangegangenen Ansprüche,
**dadurch gekennzeichnet, dass**
die Kunststoffschicht (3) den Zahn oder den Zahn samt Zahnkopf bedeckt und/oder umgibt zur elektrischen Isolierung der Statorwicklung und zur Verringerung der Oberflächenrauhigkeit.

7. Statorsegment nach einem der vorangegangenen Ansprüche,
**dadurch gekennzeichnet, dass**
an einem in Umfangsrichtung angeordneten Endbereich des Blechpakets (1) eine als Nutbereich fungierende Vertiefung ausgeformt ist und am in Umfangsrichtung anderen Endbereich eine als Federbereich fungierende Erhöhung ausgeformt ist.

8. Statorsegment nach einem der vorangegangenen Ansprüche,
**dadurch gekennzeichnet, dass**
**die Kunststoffschicht (3) auf der der ersten Endkappe (2) gegenüber liegenden Seite des Blechpakets (1) im Bereich des Zahnkopfabschnitts (52) pilzkopfförmig verbreitert ist.**

9. Stator aus gleichartigen Statorsegmenten, wobei jedes Statorsegment nach einem der vorangegangenen Ansprüche ausgeführt ist,
**dadurch gekennzeichnet, dass**
die Statorsegmente in Umfangsrichtung aneinander gereiht sind und mit einem jeweils in radialer Richtung wirksamen Formschluss zusammengesetzt sind.

10. Verfahren zum Herstellen eines Stators aus Statorsegmenten, insbesondere nach einem der vorangegangenen Ansprüche,
**dadurch gekennzeichnet, dass**
- in einem ersten Schritt ein Blechpaket (1) in eine Spritzgussform eingelegt und in einem zweiten Schritt mit Kunststoff umspritzt wird, wobei ein durch das Blechpaket (1) durchgehender Kunststoffsteg und eine zumindest zwischen Wicklungsbereich und Blechpaket (1) angeordnete Kunststoffschicht (3) **zusammen mit einer ersten Endkappe (2) in einem einzigen Arbeitsschritt** angespritzt wird an der äußeren Oberfläche des Segments, insbesondere an dessen zahnartig ausgeführten Abschnitt, **wobei der Kunststoffsteg in die erste Endkappe (2) mündet, in welche auch die Kunststoffschicht (3) mündet,**
**wobei der Kunststoffsteg auf der der ersten Endkappe (2) gegenüber liegenden Seite des Blechpakets (1) aus diesem herausragt und verbreitert, insbesondere pilzkopfförmig verbreitert, ist,**
**wobei danach die zweite Endkappe (2) auf die herausragenden Bereiche der Kunststoffschicht (3) und/oder des beziehungsweise der Kunststoffstege aufgesteckt wird,**
- in einem dritten Schritt eine Wicklung um die Kunststoffschicht (3) aufgewickelt wird,
- in einem vierten Schritt die nach dem ersten, zweiten und dritten Schritt hergestellten Segmente miteinander verbunden werden, so dass ein ringförmiger Stator entsteht, insbesondere wobei der Stator eine konzentrierte Wicklung aufweist, also Einzelzahlbewicklung.

## Claims

1. Stator segment for a stator having a segmented design of an electric motor,
wherein the stator segment comprises a laminated core (1), in which one or a plurality of plastic webs which pass through the laminated core (1) are injected,
wherein the laminated core (1) comprises a plastic layer (3) which is arranged between the winding region of the stator winding and the laminated core (1) for electrically insulating the winding region from the laminated core (1),
wherein the one or plurality of plastic webs lead into a first end cap (2), into which leads also the plastic layer (3),
**characterised in that**
the plastic web projects, on the side of the laminated core (1) opposite the first end cap (2), from said laminated core and is widened,
wherein the plastic layer (3) projects, on the side of the laminated core (1) opposite the first end cap (2), from said laminated core,
wherein the second end cap (2) is slipped onto the projecting regions of the plastic layer (3) and/or of the one or plurality of plastic webs.

2. Stator segment according to claim 1,
**characterised in that**
the first end cap (2) is produced, together with the plastic webs which pass through and the plastic layer (3), by injection moulding in a single working step.

3. Stator segment according to one of the preceding claims,
**characterised in that**
a tooth is formed on the laminated core (1), the tooth tip of which is widened.

4. Stator segment according to one of the preceding claims,
**characterised in that**
the plastic web, on the side of the laminated core (1) opposite the first end cap (2), is widened in the shape of a mushroom head.

5. Stator segment according to one of the preceding claims,
**characterised in that**
the end caps (2) divert the winding wire around the respective end region, wherein the end caps (2) comprise grooves which are spaced apart less than half or less than a third of the winding wire diameter.

6. Stator segment according to one of the preceding claims,
**characterised in that**
the plastic layer (3) covers and/or surrounds the tooth or the tooth together with tooth tip for electrical insulation of the stator winding and for reduction of the surface roughness.

7. Stator segment according to one of the preceding claims,
**characterised in that**,
at one end region of the laminated core (1), which region is arranged in the circumferential direction, an indentation acting as a slot region is formed, and at the other end region in the circumferential direction a prominence acting as a key region is formed.

8. Stator segment according to one of the preceding claims,
**characterised in that**
the plastic layer (3), on the side of the laminated core (1) opposite the first end cap (2), is widened in the shape of a mushroom head in the region of the tooth tip section (52).

9. Stator comprising stator segments of the same kind, wherein each stator segment is designed according to one of the preceding claims,
**characterised in that**
the stator segments are lined up next to one another in the circumferential direction and are assembled with a form-fit acting in each case in the radial direction.

10. Method for producing a stator composed of stator segments, in particular according to one of the preceding claims, **characterised in that**
- in a first step a laminated core (1) is inserted into an injection mould and in a second step plastic is injection-moulded around it, wherein a plastic web which passes through the laminated core (1) and a plastic layer (3) arranged at least between winding region and laminated core (1) together with a first end cap (2) is injection-moulded onto it in a single working step at the outer surface of the segment, in particular at its section of tooth-like design, wherein the plastic web leads into the first end cap (2), into which also leads the plastic layer (3),
wherein the plastic web projects, on the side of the laminated core (1) opposite the first end cap (2), from said laminated core and is widened, in particular is widened in the shape of a mushroom head,
wherein thereafter the second end cap (2) is slipped onto the projecting regions of the plastic layer (3) and/or of the one or plurality of plastic webs,
- in a third step a winding is wound around the plastic layer (3),
- in a fourth step the segments produced after the first, second and third step are connected to one another, so that an annular stator results, in particular wherein the stator comprises a concentrated winding, i.e. single-number winding.

## Revendications

1. Segment de stator pour un stator réalisé segmenté d'un moteur électrique,
sachant que le segment de stator présente un empilage de tôles (1) dans lequel sont injectées une ou plusieurs entretoises en matière plastique traversant l'empilage de tôles (1),
sachant que l'empilage de tôles (1) présente une couche (3) de matière plastique, qui est disposée entre la région d'enroulement de l'enroulement statorique et l'empilage de tôles (1) en vue de l'isolation électrique de la région d'enroulement par rapport à l'empilage de tôles (1),
sachant que l'entretoise ou les entretoises en matière plastique mènent à une première coiffe terminale (2) à laquelle mène également la couche (3) de matière plastique,
**caractérisé en ce que** l'entretoise en matière plastique, sur le côté de l'empilage de tôles (1) qui est opposé à la première coiffe terminale (2), dépasse de celui-ci et est élargie,
sachant que la couche (3) de matière plastique, sur le côté de l'empilage de tôles (1) qui est opposé à la première coiffe terminale (2), dépasse de celui-ci,
sachant que la deuxième coiffe terminale (2) est emboîtée sur les régions dépassantes de la couche (3) de matière plastique et/ou de la ou des entretoises en matière plastique.

2. Segment de stator selon la revendication 1, **caractérisé en ce que** la première coiffe terminale (2) est fabriquée par moulage par injection en une seule étape de travail conjointement avec les entretoises en matière plastique traversantes et la couche (3) de matière plastique.

3. Segment de stator selon l'une des revendications précédentes, **caractérisé en ce qu'**une dent, dont le sommet de dent est élargi, est formée sur l'empilage de tôles (1).

4. Segment de stator selon l'une des revendications précédentes, **caractérisé en ce que** l'entretoise en matière plastique, sur le côté de l'empilage de tôles (1) qui est opposé à la première coiffe terminale (2), est élargie en forme de chapeau de champignon.

5. Segment de stator selon l'une des revendications précédentes, **caractérisé en ce que** les coiffes terminales (2) dirigent le fil métallique d'enroulement tout autour de la région frontale respective, sachant que les coiffes terminales (2) présentent des gorges qui sont distantes les unes des autres de moins de la moitié ou de moins d'un tiers du diamètre du fil métallique d'enroulement.

6. Segment de stator selon l'une des revendications précédentes, **caractérisé en ce que** la couche (3) de matière plastique recouvre et/ou entoure la dent ou la dent ainsi que le sommet de dent, en vue de l'isolation électrique de l'enroulement statorique et afin de réduire la rugosité de surface.

7. Segment de stator selon l'une des revendications précédentes, **caractérisé en ce qu'**un renfoncement jouant le rôle de partie rainure est façonné dans une région terminale de l'empilage de tôles (1) qui est disposée dans la direction périphérique, et un rehaussement jouant le rôle de partie languette est façonné dans l'autre région terminale dans la direction périphérique.

8. Segment de stator selon l'une des revendications précédentes, **caractérisé en ce que** la couche (3) de matière plastique, sur le côté de l'empilage de tôles (1) qui est opposé à la première coiffe terminale (2), est élargie en forme de chapeau de champignon dans la région de la partie de sommet de dent (52).

9. Stator constitué de segments de stator analogues, sachant que chaque segment de stator est réalisé selon l'une des revendications précédentes, **caractérisé en ce que** les segments de stator sont juxtaposés en direction périphérique et sont assemblés avec un engagement positif agissant chaque fois en direction radiale.

10. Procédé de fabrication d'un stator à partir de segments de stator, en particulier selon l'une des revendications précédentes, **caractérisé en ce que**
- un empilage de tôles (1) est mis en place dans un moule d'injection au cours d'une première étape et enrobé par injection de matière plastique au cours d'une deuxième étape, sachant qu'une entretoise en matière plastique traversant l'empilage de tôles (1) et une couche (3) de matière plastique disposée entre la région d'enroulement et l'empilage de tôles (1) sont moulées par injection en une seule étape sur la surface extérieure du segment conjointement avec une première coiffe terminale (2), en particulier sur la partie du segment réalisée du genre dent, sachant que l'entretoise en matière plastique mène à la première coiffe terminale (2), à laquelle mène également la couche (3) de matière plastique,
sachant que l'entretoise en matière plastique, sur le côté de l'empilage de tôles (1) qui est opposé à la première coiffe terminale (2), dépasse de celui-ci et est élargie, en particulier est élargie en forme de chapeau de champignon,
sachant que la deuxième coiffe terminale (2) est ensuite emboîtée sur les régions dépassantes de la couche (3) de matière plastique et/ou de la ou des entretoises en matière plastique,
- au cours d'une troisième étape, un enroulement est enroulé autour de la couche (3) de matière plastique,
- au cours d'une quatrième étape, les segments fabriqués selon la première, la deuxième et la troisième étapes sont assemblés entre eux, de sorte qu'on obtient un stator annulaire, sachant en particulier que le stator présente un enroulement concentré, donc un enroulement individuel.
